# EUROPÄISCHE PATENTSCHRIFT

(11) **EP 3 845 872 B1**
(45) Veröffentlichungstag und Bekanntmachung des Hinweises auf die Patenterteilung: **12.07.2023**
(21) Anmeldenummer: 19220094.7
(22) Anmeldetag: 30.12.2019
(51) Int. Cl.: G01G 3/14, G01G 21/24, G01L 1/22

(54) **WÄGEZELLE**
WEIGHING CELL
CELLULE DE PESAGE

(43) Veröffentlichungstag der Anmeldung: 07.07.2021
(73) Patentinhaber: Bizerba SE & Co. KG, 72336 Balingen (DE)
(72) Erfinder: Fritsch, Andreas, 72336 Balingen (DE); Metzger, Frank, 72461 Albstadt (DE); Witte, Harald, 72336 Balingen (DE); Kallmann, Luca, 78669 Wellendingen (DE)
(74) Vertreter: Huber, Meik

(56) Entgegenhaltungen:
- EP-A2- 0 251 175
- DE-A1-102008 056 715
- US-A- 4 655 305

## Beschreibung

Die vorliegende Erfindung betrifft eine Wägezelle mit einem monolithisch ausgebildeten Messkörper, der einen Kraftaufnahmeabschnitt, einen Krafteinleitungsabschnitt und einen zwischen dem Kraftaufnahmeabschnitt und dem Krafteinleitungsabschnitt angeordneten Gelenkabschnitt aufweist. Der Messkörper weist eine Längsachse zwischen einem kraftaufnahmeseitigen axialen Ende und einem krafteinleitungsseitigen axialen Ende auf. Die Längsachse ist in einer horizontalen Richtung ausgebildet. Der Messkörper umfasst in seinem Kraftaufnahmeabschnitt mindestens ein Befestigungsloch zur Befestigung des Messkörpers, wobei die Achse des mindestens einen Befestigungslochs in einer horizontalen Richtung verläuft.

Bei einer Vielzahl vom aus dem Stand der Technik bekannten Wägezellen wird die kraftaufnahmeseitige Befestigung durch Bohrungen gebildet, die in vertikaler Richtung den Kraftaufnehmer durchdringen. Die Dehnungsmessstreifen sind dabei in horizontaler Richtung und somit senkrecht zu den Achsen der Befestigungslöcher ausgebildet. Davon abweichend ist im Stand der Technik aus der DE3733961A1 eine Wägezelle bekannt, deren Bohrungen zur kraftaufnahmeseitigen Befestigung den Messkörper in horizontaler Richtung durchdringen. Daraus folgenden bildet der Stand der Technik eine Wägezelle mit einer derartigen kraftaufnahmeseitigen Befestigung derart aus, dass auch die krafteinleitungsseitige Befestigung in horizontaler Richtung angeordnet ist und die Dehnungsmessstreifen an einem Verformungselement in vertikaler Richtung angebracht sind, das heißt senkrecht zu den Achsen der kraftaufnahmeseitigen und krafteinleitungsseitigen Befestigungen.

Relevanter Stand der Technik sind die Patentschriften US 4 655 305 A, EP 0 251 175 A2 und DE 10 2008 056715 A1.

Aufgabe der Erfindung ist es, eine Wägezelle der eingangs genannten Art zu verbessern und insbesondere eine Wägezelle vorzuschlagen, die eine höhere Flexibilität bezüglich ihres Einbaus und eine schmalere Bauform aufweist.

Diese Aufgabe wird durch eine Wägezelle nach Anspruch 1 gelöst.

Erfindungsgemäß wird eine Wägezelle mit einem monolithisch ausgebildeten Messkörper, der einen Kraftaufnahmeabschnitt, einen Krafteinleitungsabschnitt und einen zwischen dem Kraftaufnahmeabschnitt und dem Krafteinleitungsabschnitt angeordneten Gelenkabschnitt aufweist, vorgeschlagen. Der Messkörper weist eine Längsachse zwischen einem kraftaufnahmeseitigen axialen Ende und einem krafteinleitungsseitigen axialen Ende auf. Die Längsachse ist in einer horizontalen Richtung ausgebildet, wobei der Messkörper in seinem Kraftaufnahmeabschnitt mindestens ein Befestigungsloch zur Befestigung des Messkörpers umfasst. Die Achse des mindestens einen Befestigungslochs verläuft in einer horizontalen Richtung. Insbesondere sind die Längsachse des Messkörpers und die Achse des Befestigungslochs rechtwinklig ausgerichtet. Das heißt, die Achse des Befestigungslochs und die Längsachse des Messkörpers geben die Richtungen der horizontalen Ebene vor. Insbesondere bildet der Gelenkabschnitt einen Parallelogrammlenker, der in vertikaler Richtung bewegbar ist. Die Wägezelle umfasst mindestens einen in dem Bereich des Gelenkabschnitts oberseitig oder unterseitig an dem Messkörper angeordneten Dehnungsmessstreifen zur Erfassung einer dehnenden oder stauchenden Verformung des Messkörpers. Dabei erfasst der Dehnungsmessstreifen insbesondere die Verformung des Gelenkabschnitts. Der mindestens eine Dehnungsmessstreifen ist in horizontaler Richtung ausgerichtet. Das hat den Vorteil, dass die Wägezelle seitlich an einer Halterung festgeschraubt werden kann. Dies ist in vielen Fällen von Vorteil, wenn die Halterung eine vertikale Fläche, wie zum Beispiel eine Wand ist. Durch diese Form der Befestigung lässt sich der Kraftaufnahmeabschnitt und damit die gesamte Wägezelle besonders schmal gestalten. Dies ist insbesondere dann von Vorteil, wenn nur ein geringer seitlicher Bauraum für die Wägezelle zur Verfügung steht.

In einer Ausführungsform besteht der mindestens eine Dehnungsmessstreifen aus einer mäanderförmig parallel verlaufenden Widerstandsbahn. Das heißt, die mäanderförmige Widerstandsbahn bildet eine Ebene. Die mäanderförmige Widerstandsbahn befindet sich in der horizontalen Ebene. Die mäanderförmige Widerstandsbahn ist parallel zur Längsachse des Messkörpers ausgerichtet.

In einer Ausführungsform umfasst der Gelenkabschnitt mindestens eine, insbesondere zwei Dünnstellen an einem oberen Gelenkelement und mindestens eine, insbesondere zwei Dünnstellen an einem parallel zum oberen Gelenkelement verlaufenden unteren Gelenkelement.

In einer Ausführungsform umfasst die Wägezelle in den Bereichen der zwei Dünnstellen des oberen Gelenkelements jeweils einen oberseitig am oberen Gelenkelement angeordneten Dehnungsmessstreifen. In einer Ausführungsform umfasst die Wägezelle zusätzlich in den Bereichen der zwei Dünnstellen des unteren Gelenkelements jeweils einen unterseitig am unteren Gelenkelement angeordneten Dehnungsmessstreifen. Die vier Dehnungsmessstreifen der Wägezelle sind zu einer Wheatstoneschen Messbrücke verschaltet. In einer Ausführungsform sind die Verschaltung der zwei oberseitig angeordneten Dehnungsmessstreifen und die zwei oberseitig angeordneten Dehnungsmessstreifen auf einer Dehnungsmessstreifenfolie angebracht. In einer Ausführungsform sind die Verschaltung der zwei unterseitig angeordneten Dehnungsmessstreifen und die zwei unterseitig angeordneten Dehnungsmessstreifen auf einer Dehnungsmessstreifenfolie angebracht.

In einer Ausführungsform umfasst die Wägezelle in den Bereichen der zwei Dünnstellen des oberen Gelenkelements jeweils zwei oberseitig am oberen Gelenkelement angeordnete Dehnungsmessstreifen. Die jeweils zwei Dehnungsmessstreifen sind parallel ausgerichtet und bezüglich einer schmalen Seite des Messkörpers nebeneinander angeordnet. Die vier Dehnungsmessstreifen der Wägezelle sind zu einer Wheatstoneschen Messbrücke verschaltet. In einer Ausführungsform sind die Verschaltung der Dehnungsmessstreifen und die Dehnungsmessstreifen auf einer Dehnungsmessstreifenfolie angebracht. In anderen Worten heißt das, dass vier Dehnungsmessstreifen zu einer Wheatstoneschen Messbrücke verschaltet sind. Die Dehnungsmessstreifen sind alle in gleicher Richtung, nämlich parallel der Längsachse des Messkörpers, ausgerichtet. Die vier Dehnungsmessstreifen sind paarweise angeordnet, wobei in jedem Paar von Dehnungsmessstreifen, die Dehnungsmessstreifen bezüglich ihrer Ausrichtung nebeneinander positioniert sind. Jedes Paar von Dehnungsmessstreifen ist auf der Oberseite des oberen Gelenkelements angebracht. Im Bereich jeder der zwei Dünnstellen des oberen Gelenkelements des Messkörpers befindet sich ein Paar von nebeneinander angeordneten Dehnungsmessstreifen.

In einer Ausführungsform weisen alle Dünnstellen die gleiche Dicke auf. In einer Ausführungsform weisen alle Dünnstellen die gleiche Form auf.

Erfindungsgemäß weist der Krafteinleitungsabschnitt eine Aufnahme auf, die als ein von der Oberseite des Messkörpers ausgehender und senkrecht zur Längsachse verlaufender Einschnitt ausgebildet ist. Erfindungsgemäß ist der Einschnitt der Aufnahme in der schmalen Richtung des Messkörper über die komplette Breite des Messkörpers ausgebildet. Erfindungsgemäß hat der Einschnitt der Aufnahme auf seiner von der Oberseite des Messkörpers abgewandten Seite eine runde Kontur. Dieser Einschnitt ist während der Herstellung des Messkörpers zum Beispiel derart zu bilden, dass ein Loch in den Messkörper gebohrt wird. Dieses Loch wird dann zur Oberseite des Messkörpers hin ausgefräst. Erfindungsgemäß umfasst die Wägezelle einen Einsatz, der formschlüssig in der runden Kontur der Aufnahme anliegt, wobei der Einsatz auf seiner dem Formschluss mit der runden Kontur gegenüberliegenden Seite eine rechteckige Kontur zur Aufnahme eines Kraftübertragungselements aufweist. Das heißt, der Einsatz ist im Wesentlichen U-förmig.

Erfindungsgemäß ist das Kraftübertragungselement derart ausgebildet, dass es formschlüssig in der rechteckigen Kontur des Einsatzes aufnehmbar ist. Das heißt, das Kraftübertragungselement hat im Wesentlichen die Form eines auf dem Kopf stehenden U. Das Kraftübertragungselement weist eine Schneide zum Abstützen eines zu wiegenden Gegenstandes, insbesondere einer zu wiegenden Strebe auf. Dadurch ist der zu wiegende Gegenstand nicht starr mit dem Messkörper verbunden, was zu einer momentenfreien Kraftaufnahme führt. In anderen Worten wird der Messkörper nicht durch den starr verbundenen zu wiegenden Gegenstand verspannt. Dies ist insbesondere von Vorteil, wenn die Wägezelle für Multipoint Messungen eingesetzt wird.

In einer Ausführungsform ist der Messkörper spiegelsymmetrisch zu einer Ebene, deren Ausrichtung parallel zur Längsachse und zur Achse des mindestens einen Befestigungslochs ist. Mit anderen Worten heißt das, falls die schmale, lange Seite des Messkörpers horizontal ausgerichtet ist, so ist der Messkörper zu einer horizontalen Ebene, die den Messkörper auf seiner halben Höhe durchdringt, symmetrisch. Eine Aufnahme für einen Einsatz ist auch auf der Unterseite des Messkörpers ausgebildet. Diese Seite ist nicht dazu vorgesehen, eine zu messende Kraft einzuleiten. Allerdings kann der Messkörper in einer um 180° gedrehten Position als Messkörper für eine Wägezelle dienen, so dass die Unterseite zur Oberseite wird. In dieser Ausrichtung wird dann die Kraft über die ehemals untere Aufnahme eingeleitet. Dies hat den Vorteil, dass der Messkörper als Basis für Wägezellen dienen kann, deren Anordnung von links nach rechts Krafteinleitungsabschnitt, Gelenkabschnitt, Kraftaufnahmeabschnitt, sowie Kraftaufnahmeabschnitt, Gelenkabschnitt, Krafteinleitungsabschnitt ist. Der Messkörper ist somit universell für die Produktion von verschieden ausgerichteten Wägezellen einsetzbar. In einer Ausführungsform weist der Messkörper entlang seiner Längsachse eine Länge, von der Oberseite des oberen Gelenkelements zur Unterseite des unteren Gelenkelements eine Höhe und in der zur Länge und Höhe rechtwinklig stehenden Dimension eine Breite auf. Die Breite des Messkörpers ist zwischen 3 mm und 40 mm, insbesondere zwischen 5 mm und 20 mm. Die Länge des Messkörpers beträgt das 15 bis 25 fache, insbesondere das 16 bis 20 fache der Breite. Die Höhe des Messkörpers beträgt das 5 bis 10 fache, insbesondere das 5 bis 8 fache der Breite des Messkörpers. Im Vergleich zu aus dem Stand der Technik bekannten Wägezellen ist der Messkörper der erfindungsgemäßen Wägezelle sehr schmal und sehr hoch. Durch die veränderten Dimensionen ist das mechanische Verhalten des Messkörpers unter einer Krafteinwirkung von oben von dem von herkömmlichen Wägezellen stark unterschiedlich. Diese Dimensionierung hat insbesondere den Vorteil, dass aufgrund der Form des Messkörpers die Dünnstellen nicht separat und vor allem nicht individuell nachbearbeitet werden müssen. Aufgrund der Dimensionierung des Messkörpers wirken sich Toleranzen messtechnisch weniger aus. So können alle vier Dünnstellen gleich ausgebildet sein, wohingegen bei Messkörpern im Stand der Technik die Dünnstellen am oberen und unteren Gelenkabschnitt eine unterschiedliche Dicke haben und oft bei der Fertigung individuell nachbearbeitet, das heißt abgeglichen werden müssen.

In einer Ausführungsform beträgt die Länge des Krafteinleitungsabschnitts entlang der Längsachse des Messkörpers zwischen 15 % und 25 %, insbesondere 20 % der Länge des Messkörpers. Die Länge des Gelenkabschnitts entlang der Längsachse des Messkörpers beträgt zwischen 20 % und 30 %, insbesondere 25 % der Länge des Messkörpers. Die Länge des Kraftaufnahmeabschnitts entlang der Längsachse des Messkörpers beträgt zwischen 65 % und 45 %, insbesondere 55 % der Länge des Messkörpers. In einer Ausführungsform umfasst der Messkörper mindestens drei, insbesondere vier Befestigungslöcher, die als Bohrungen ausgebildet sind und in horizontaler Richtung durch den Messkörper verlaufen und wobei insbesondere die Bohrungen auf einer Seite Versenkungen enthalten, die zur Aufnahme von Senkköpfen von Schrauben ausgebildet sind. Der Kraftaufnahmeabschnitt ist im Gegensatz zu bekannten Wägezellen relativ groß ausgebildet. Dies ermöglicht eine Anordnung der Schrauben zur Befestigung des Messkörpers in einer Richtung quer zur Verformungsrichtung. Die Achsen der Befestigungsschrauben sind somit parallel zur Breite des Messkörpers, also entlang seiner kleinsten Dimension ausgerichtet. Die große Fläche des Kraftaufnahmeabschnitts ermöglicht ein stabiles Montieren des Messkörpers an einer vertikal stehenden Befestigungsfläche, zum Beispiel einem vertikalen Träger oder einer Wand, ohne dass, durch eine Krafteinleitung am Krafteinleitungsabschnitt, nennenswerte mechanische Spannungen im Bereich der Befestigungslöcher auftreten. Somit beeinflussen die Befestigungslöcher nicht die Messgenauigkeit.

In einer Ausführungsform weist der Messkörper entlang seiner Längsachse von einem gelenkabschnittsnahen Teil des Kraftaufnahmeabschnitts bis zum Gelenkabschnitt eine Vertiefung auf, die zur zumindest teilweisen Aufnahme einer Leiterplatte mit darauf angeordneter Elektronik, insbesondere eines Analog-Digital-Wandlers zur Verarbeitung wenigstens eines Ausgangssignals des zumindest einen Dehnungsmessstreifens, ausgebildet ist.

Einige Ausführungsformen der Erfindung sind in den Zeichnungen beispielhaft gezeigt und nachfolgend beschrieben. Es zeigen, jeweils in schematischer Darstellung:
- Fig. 1: einen erfindungsgemäßen Messkörper für eine erfindungsgemäße Wägezelle in einer Vorderansicht,
- Fig. 2: einen erfindungsgemäßen Messkörper in einer Rückansicht,
- Fig. 3: eine erfindungsgemäße Wägezelle in einer Rückansicht,
- Fig. 4: eine erfindungsgemäße Wägezelle in einer isometrischen Ansicht,
- Fig. 5: den Krafteinleitungsabschnitt mit Einsatz und Kraftübertragungselement einer erfindungsgemäßen Wägezelle in einer Vorderansicht,
- Fig. 6: den Krafteinleitungsabschnitt mit Einsatz und Kraftübertragungselement einer erfindungsgemäßen Wägezelle in einer Explosionszeichnung, und
- Fig. 7 und 8: ein Messkörper einer erfindungsgemäßen Wägezelle mit Dehnungsmessstreifen in einer isometrischen Ansicht.

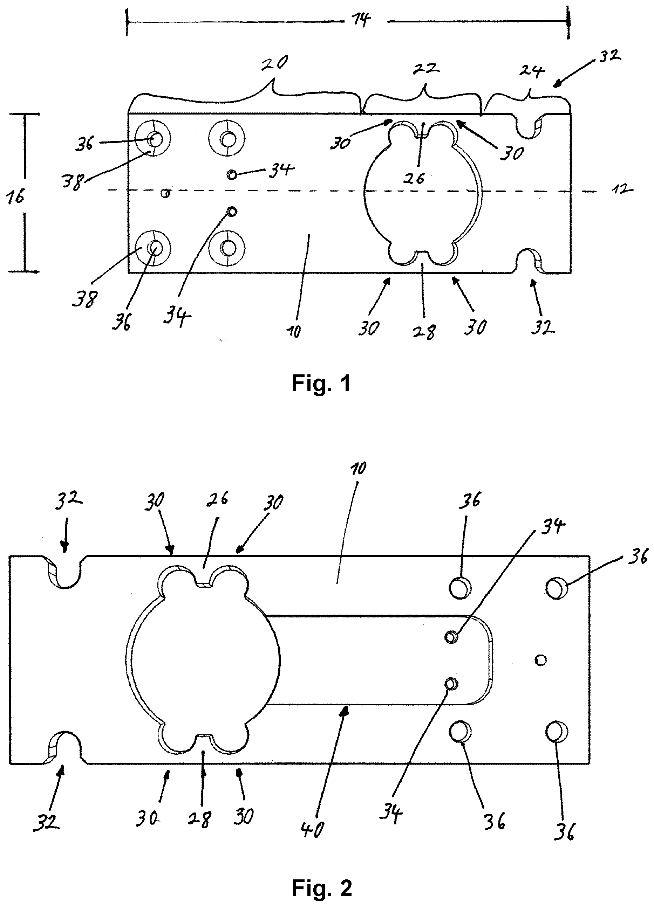

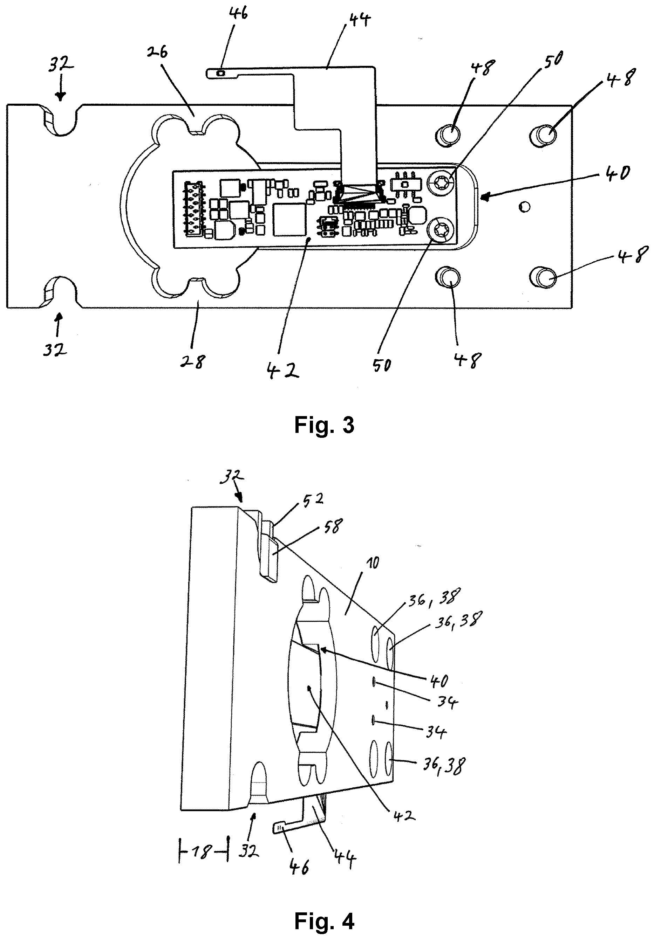

Fig. 1 zeigt schematisch einen Messkörper 10 in einer Vorderansicht für eine erfindungsgemäße Wägezelle. Der Messkörper 10 dient dabei als Verformungskörper, von dessen Verformung auf eine auf den Messkörper 10 wirkende Gewichtskraft rückgeschlossen wird. Der Messkörper 10 weist einen Krafteinleitungsabschnitt 24, einen Gelenkabschnitt 22 und einen Kraftaufnahmeabschnitt 20 auf. Am Krafteinleitungsabschnitt 24 wird eine zu messende Gewichtskraft angelegt. Mit seinem Kraftaufnahmeabschnitt 20 ist der Messkörper 10 an einem festen Gegenstand angebracht. Der Messkörper 10 weist eine Längsachse 12 zwischen seinem kraftaufnahmeseitigen axialen Ende und seinem krafteinleitungsseitigen axialen Ende auf. Entlang seiner Längsachse 12 hat der Messkörper eine Ausdehnung in Längsrichtung, eine Länge 14. Rechtwinklig zur Ausdehnung entlang der Längsachse 12 hat der Messkörper eine Ausdehnung in vertikaler Richtung, eine Höhe 16. In Fig. 1 nicht gezeigt hat der Messkörper eine Ausdehnung in einer dritten Dimension, in Fig. 1 nach hinten, eine Breite 18 (siehe Fig. 4). Beispielhaft hat ein Messkörper 10 eine Breite 18 von 10 mm, eine Höhe 16 von 65 mm und eine Länge 14 von 180 mm. Entlang der Längsachse 12 nimmt der Krafteinleitungsabschnitt 24 ca. 20 %, der Gelenkabschnitt 22 ca. 25 % und der Kraftaufnahmeabschnitt 20 ca. 55 % der Länge 14 des Messkörpers 10 ein. In der Ansicht von Fig. 1 ist der Messkörper 10 symmetrisch zu einer horizontalen Ebene, die den Messkörper in Richtung der Höhe mittig teilt. In dem Krafteinleitungsabschnitt 24 ist eine Aufnahme 32 vorgesehen, die den Messkörper 10 in Richtung seiner Breite 18 komplett durchdringt. Die Aufnahme 32 ist als Bohrung ausgebildet, die im Bereich der Oberseite des Messkörpers angebracht ist, wobei die Bohrung hin zu der Oberseite des Messkörpers 10 ausgefräst ist. Die Aufnahme 32 weist dementsprechend in Richtung des Messkörpers 10 im Messkörper 10 eine runde Kontur auf. Ebenfalls ist eine Aufnahme an der Unterseite des Messkörpers 10 im Bereich des Krafteinleitungsabschnitts ausgebildet. Der Messkörper 10 ist im Bereich des Gelenkabschnitts auf einem Großteil seiner Höhe von einer runden Öffnung durchdrungen. Im oberen und unteren Bereich der dadurch entstehenden Durchdringung sind jeweils zwei kleinere runde Öffnungen angebracht, die den Messkörper 10 ebenfalls vollständig durchdringen. So ist in dem Messkörper 10 ein oberes Gelenkelement 26, das zwei Dünnstellen 30 aufweist und ein unteres Gelenkelement 28, das zwei Dünnstellen 30 aufweist, gebildet. Die Dünnstellen 30 bewirken, dass das Gelenkelement 22 bei Krafteinwirkung am Krafteinleitungsabschnitt 24 verformt wird. Das Gelenkelement 22 ist ein Parallelogrammlenker. Im Kraftaufnahmeabschnitt 20 des Messkörpers 10 sind vier Befestigungslöcher 36 angebracht, die den Messkörper 10 ebenfalls in Richtung seiner Breite 18 durchdringen. Die Befestigungslöcher 36 sind mit Versenkungen 38 versehen, so dass der Messkörper 10 mit Senkschrauben an einen festen Gegenstand geschraubt werden kann. Des Weiteren sind im Kraftaufnahmeabschnitt 20 des Messkörpers 10 Bohrungen 24 zur Befestigung einer Leiterplatte vorgesehen.

Fig. 2 zeigt einen Messkörper 10 nach Fig. 1 in der Rückansicht. Des Messkörper aus Fig. 1 ist dabei entlang einer vertikalen Achse gedreht dargestellt. Im Bereich des Kraftaufnahmeabschnitts 20 befindet sich eine Vertiefung 40, die bis hin zum Gelenkabschnitt 22 reicht. Die Vertiefung 40 durchdringt den Messkörper 10 nicht. Durch die Vertiefung 40 entsteht keine zusätzliche Verformbarkeit des Messkörpers 10. Die Bohrungen 24 zur Befestigung einer Leiterplatte befinden sich innerhalb der Vertiefung 40. Die Vertiefung 40 ist zur zumindest teilweisen Aufnahme einer Leiterplatte vorgesehen, wobei auf der Leiterplatte Elektronik angeordnet ist, insbesondere ein Analog-Digital-Wandler zur Verarbeitung wenigstens eines Ausgangssignals von zumindest einem Dehnungsmessstreifen.

Fig. 3 zeigt die Wägezelle in einer Rückansicht. Der Messkörper 10 ist dabei gleich wie in Fig. 2 ausgerichtet. In den Befestigungslöchern 36 sind Schrauben 48 gezeigt, die dazu dienen, die Wägezelle mit ihrem Kraftaufnahmeabschnitt 20 an einem vertikalen Träger festzuschrauben. Die Leiterplatte 42 ist mit Schrauben 50 in der Vertiefung 40 des Messkörpers 10 in den Bohrungen 34 für die Leiterplatte 42 festgeschraubt. Mit der Leiterplatte 42 ist eine Leiterfolie 44 verbunden, die zur Kontaktierung der Dehnungsmessstreifen dient. An der Leiterfolie 44 ist ein Temperatursensor 46 angebracht, der zum Temperaturabgleich dient.

Fig. 4 zeigt eine isometrische Ansicht einer erfindungsgemäßen Wägezelle mit einem Messkörper 10. In dieser Ansicht ist gut erkennbar, dass die Breite 18 des Messkörpers 10 im Verhältnis zu seiner Höhe 16 und zu seiner Länge 14 sehr schmal ist. Außerdem ist in Fig. 4 durch die Öffnung im Gelenkabschnitt 22 die Leiterplatte 42 in der Vertiefung 40 des Messkörpers 10 sichtbar. In der oberen Aufnahme 32 des Messkörpers 10 ist ein Einsatz 52 und ein Kraftübertragungselement 58 gezeigt, die im Folgenden genauer beschrieben sind.

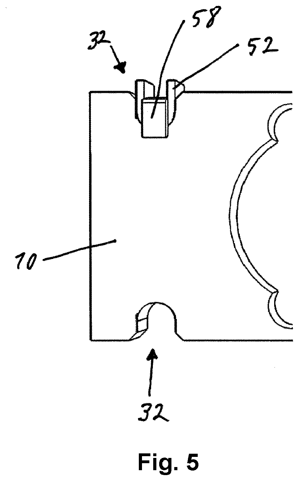

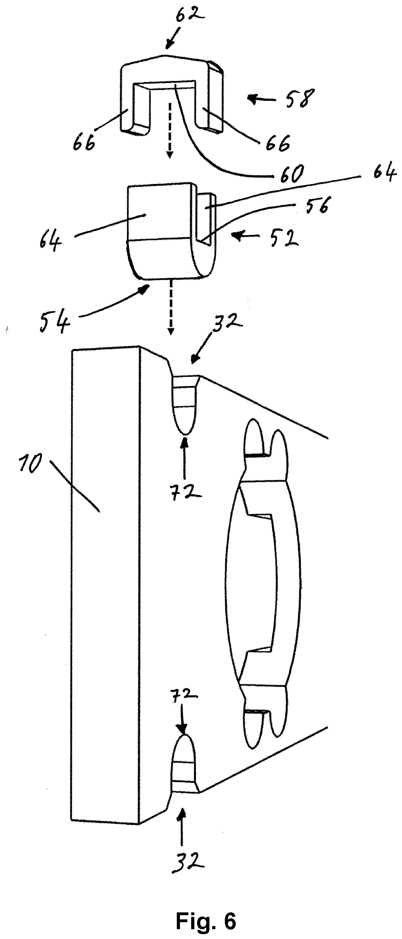

Fig. 5 zeigt den Krafteinleitungsabschnitt 24 eines Messkörpers 10 mit einem Einsatz 52, welcher formschlüssig in der runden Kontur der Aufnahme 32 des Messkörpers anliegt. Der Einsatz 52 haltert ein Kraftübertragungselement 58. Zur Verdeutlichung des Zusammenwirkens von Aufnahme 32, Einsatz 52 und Kraftübertragungselement 58 ist in Fig. 6 eine Explosionszeichnung des Messkörpers 10, des Einsatz 52 und des Kraftübertragungselements 58 in isometrischer Ansicht dargestellt. Der Einsatz 52 wird in die Aufnahme 32 eingeführt, wobei die runde Kontur 54 an der Unterseite des Einsatz 32 formschlüssig in der runden Kontur 72 der Aufnahme 32 des Messkörpers 10 zu liegen kommt. Dabei ist der Einsatz 52 im Wesentlichen U-förmig ausgebildet und hat auf seiner Innenseite eine rechteckige Kontur 56. Der Einsatz 52 entspricht in seiner Breite der Breite 18 des Messkörpers 10. Das Kraftübertragungselement 58 ist ebenfalls im Wesentlichen U-förmig ausgebildet, jedoch um eine vertikale Achse im Vergleich zum Einsatz 52 um 90° gedreht. Außerdem ist das Kraftübertragungselement 58 im Vergleich zum Einsatz 52 um eine horizontale Achse um 180° gedreht. Das Kraftübertragungselement 58 hat auf seiner Innenseite eine rechteckige Kontur 60, die dazu vorgesehen ist, auf der rechteckigen Kontur 56 des Einsatzes 52 aufzuliegen. Das Kraftübertragungselement 58 ist derart angeordnet, dass seine Flanken 66 über den Einsatz 52 hinweg greifen und teilweise über den Messkörper 10 hinausragen, so dass die U-förmige Struktur des Kraftübertragungselements 58 ein hinausrutschen des Einsatzes 52 aus der Aufnahme 32 und ein verrutschen des Kraftübertragungselements 58 selbst im Bezug auf den Messkörper 10 verhindern. Auf seiner Oberseite weist des Kraftübertragungselement 58 eine Schneide 62 auf, das heißt eine spitz zulaufende Kontaktachse für einen zu messenden Gegenstand. Im montierten Zustand des Einsatz 52 und des Kraftübertragungselements 58 ist die Schneide 62 des Kraftübertragungselements 58 parallel zur Längsachse 12 des Messkörpers 10 ausgerichtet. Die Flanken 64 des Einsatzes 52 ragen über die Schneide 62 des Kraftübertragungselements 58 hinaus, so dass sie eine Begrenzung der Schneide entlang der Längsachse 12 des Messkörpers 10 darstellen. Ein Gegenstand, zum Beispiel ein Stab oder eine Schiene, der auf der Schneide 62 des Kraftübertragungselements 58 aufliegt und gewogen wird, wird von den Flanken 64 des Einsatzes 52 daran gehindert, über die Schneide 62 des Kraftübertragungselements 58 in Richtung der Längsachse 12 des Messkörpers 10 hinweg zu rutschen.

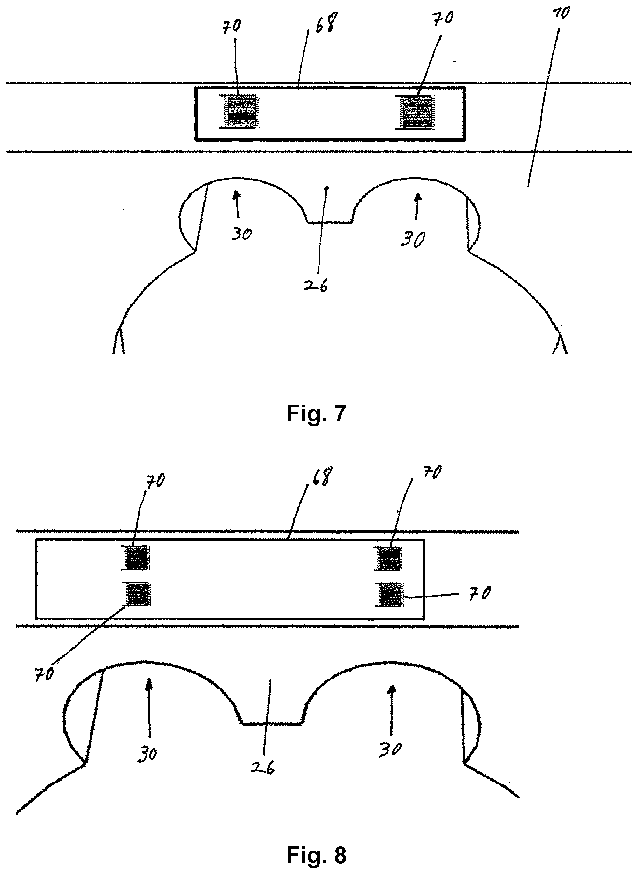

Fig. 7 zeigt eine isometrische Draufsicht auf den Gelenkabschnitt 20 des Messkörpers 10 der Wägezelle. Auf den Dünnstellen 30 des oberen Gelenkelements 26 ist eine Dehnungsmessstreifen-Folie 68 mit zwei Dehnungsmessstreifen 70 angebracht. Der Übersichtlichkeit halber ist die Verschaltung der Dehnungsmessstreifen 70 auf der Folie sowie die Kontaktierung der Dehnungsmessstreifen-Folie nicht dargestellt. Die beiden Dehnungsmessstreifen 70 sind mit zwei weiteren Dehnungsmessstreifen, welche an der Unterseite des unteren Gelenkelements 28 angebracht sind, zu einer Wheatstoneschen Messbrücke (Brückenschaltung) verschaltet. Über eine Kontaktierung sind die Dehnungsmessstreifen 70 mit der Leiterfolie 44 und somit mit der Leiterplatte 42 der Wägezelle verbunden. Fig. 8 zeigt eine isometrische Draufsicht auf den Gelenkabschnitt des Messkörpers 10 der Wägezelle. Auf den Dünnstellen 30 des oberen Gelenkelements 26 ist eine Dehnungsmessstreifen-Folie 68 mit vier Dehnungsmessstreifen 70 angebracht. Die vier Dehnungsmessstreifen 70 sind auf der Dehnungsmessstreifen-Folie zu einer Wheatstoneschen Messbrücke verschaltet und über die Leiterfolie 44 mit der Leiterplatte 42 elektrisch verbunden. Die Ausrichtung der mäanderförmig angeordneten Widerstandsbahnen der Dehnungsmessstreifen 70 auf dem oberen Gelenkelement 26 oder auf dem oberen und unteren Gelenkelement 26, 28 ist immer in Richtung der Längsachse 12 des Messkörpers 10. Die Dehnungsmessstreifen 70 sind jeweils in horizontaler Richtung ausgerichtet. Das heißt, die Fläche, die durch die mäanderförmig angeordneten Widerstandsbahnen des Dehnungsmessstreifen 70 entsteht ist horizontal, so dass die Dehnungsmessstreifen 70 auf der Oberseite des oberen Gelenkelements 26 oder auf der Unterseite des unteren Gelenkelements 28 angeordnet sind. Die Ausrichtung dieser Fläche in einem kartesischen Koordinatensystem entspricht der Ausrichtung der schmalen langen Seite des Messkörpers 10.

## Patentansprüche

1. Wägezelle mit einem monolithisch ausgebildeten Messkörper (10), der einen Kraftaufnahmeabschnitt (20), einen Krafteinleitungsabschnitt (24) und einen zwischen dem Kraftaufnahmeabschnitt (20) und dem Krafteinleitungsabschnitt (24) angeordneten Gelenkabschnitt (22) aufweist, wobei der Messkörper (10) eine Längsachse (12) zwischen einem kraftaufnahmeseitigen axialen Ende und einem krafteinleitungsseitigen axialen Ende aufweist, wobei die Längsachse (12) in einer horizontalen Richtung ausgebildet ist, wobei der Messkörper (10) in seinem Kraftaufnahmeabschnitt (20) mindestens ein Befestigungsloch (36) zur Befestigung Messkörpers (10) umfasst, wobei die Achse des mindestens einen Befestigungslochs (36) in einer horizontaler Richtung verläuft, wobei
die Wägezelle mindestens einen in dem Bereich des Gelenkabschnitts (24) oberseitig oder unterseitig an dem Messkörper (10) angeordneten Dehnungsmessstreifen (70) zur Erfassung einer dehnenden oder stauchenden Verformung des Messkörpers (10) umfasst, wobei der mindestens eine Dehnungsmessstreifen (70) in horizontaler Richtung ausgerichtet ist, **dadurch gekennzeichnet, dass** der Krafteinleitungsabschnitt (24) eine Aufnahme (32) aufweist, die als ein von der Oberseite des Messkörpers (10) ausgehender und senkrecht zur Längsachse verlaufender Einschnitt ausgebildet ist, und dass der Einschnitt der Aufnahme (32) in einer schmalen Richtung des Messkörpers über seine komplette Breite (18) ausgebildet ist, und dass der Einschnitt der Aufnahme (32) auf seiner von der Oberseite des Messkörpers abgewandten Seite eine runde Kontur (72) hat und die Wägezelle einen Einsatz (52) umfasst, der formschlüssig in der runden Kontur (72) der Aufnahme (32) anliegt und wobei der Einsatz (52) auf seiner dem Formschluss mit der runden Kontur gegenüberliegenden Seite eine rechteckige Kontur (56) zur Aufnahme eines Kraftübertragungselements (58) aufweist, und dass das Kraftübertragungselement (58) derart ausgebildet ist, dass es formschlüssig in der rechteckigen Kontur des Einsatzes (52) aufnehmbar ist, und dass das Kraftübertragungselement (58) eine Schneide (62) zum Abstützen einer zu wiegenden Strebe aufweist.

2. Wägezelle nach Anspruch 1, **dadurch gekennzeichnet,**
**dass** der mindestens eine Dehnungsmessstreifen (70) aus einer mäanderförmig parallel verlaufenden Widerstandsbahn besteht, die parallel zur Längsachse (12) des Messkörpers (10) ausgerichtet ist.

3. Wägezelle nach Anspruch 1 oder 2, **dadurch gekennzeichnet, dass** der Gelenkabschnitt (22) mindestens eine, insbesondere zwei Dünnstellen (30) an einem oberen Gelenkelement (26) aufweist und mindestens eine, insbesondere zwei Dünnstellen (30) an einem parallel zum oberen Gelenkelement (26) verlaufenden unteren Gelenkelement (28) aufweist.

4. Wägezelle nach Anspruch 3, **dadurch gekennzeichnet, dass** die Wägezelle in den Bereichen der zwei Dünnstellen (39) des oberen Gelenkelements (26) jeweils einen oberseitig am oberen Gelenkelement (26) angeordneten Dehnungsmessstreifen (70) umfasst, und dass die Wägezelle in den Bereichen der zwei Dünnstellen (30) des unteren Gelenkelements (28) jeweils einen unterseitig am unteren Gelenkelement (28) angeordneten Dehnungsmessstreifen (70) umfasst, und wobei die vier Dehnungsmessstreifen (70) der Wägezelle zu einer Wheatstoneschen Messbrücke verschaltet sind, und wobei insbesondere die Verschaltung der zwei oberseitig angeordneten Dehnungsmessstreifen (70) und die zwei oberseitig angeordneten Dehnungsmessstreifen (70) auf einer Dehnungsmessstreifenfolie (68) angebracht sind und wobei die Verschaltung der zwei unterseitig angeordneten Dehnungsmessstreifen (70) und die zwei unterseitig angeordneten Dehnungsmessstreifen (70) auf einer Dehnungsmessstreifenfolie (68) angebracht sind.

5. Wägezelle nach Anspruch 3, **dadurch gekennzeichnet, dass** die Wägezelle in den Bereichen der zwei Dünnstellen (30) des oberen Gelenkelements (26) jeweils zwei oberseitig am oberen Gelenkelement (26) angeordnete Dehnungsmessstreifen (70) umfasst, wobei die jeweils zwei Dehnungsmessstreifen (70) parallel ausgerichtet und bezüglich einer schmalen Seite (18) des Messkörpers nebeneinander angeordnet sind, und wobei die vier Dehnungsmessstreifen (70) der Wägezelle zu einer Wheatstoneschen Messbrücke verschaltet sind, und wobei insbesondere die Verschaltung der Dehnungsmessstreifen (70) und die Dehnungsmessstreifen (70) auf einer Dehnungsmessstreifenfolie (68) angebracht sind.

6. Wägezelle nach einem der Ansprüche 3 bis 5, **dadurch gekennzeichnet, dass** alle Dünnstellen (30) die gleiche Dicke aufweisen und insbesondere die gleiche Form aufweisen.

7. Wägezelle nach einem der Ansprüche 1 bis 6, **dadurch gekennzeichnet, dass** der Messkörper (10) spiegelsymmetrisch zu einer Ebene ist, deren Ausrichtung parallel zur Längsachse (12) und zur Achse des mindestens einen Befestigungslochs (36) ist.

8. Wägezelle nach einem der Ansprüche 1 bis 7, **dadurch gekennzeichnet, dass** der Messkörper (10) entlang seiner Längsachse (12) eine Länge (14), von der Oberseite des oberseitigen Gelenkelements (26) zur Unterseite des unterseitigen Gelenkelements (28) eine Höhe (16) und in der zur Länge und Höhe rechtwinklig stehenden Dimension eine Breite (18) aufweist, wobei die Breite (18) des Messkörpers zwischen 3 mm und 40 mm, insbesondere zwischen 5 mm und 20 mm ist, und wobei die Länge (14) des Messkörpers das 15 bis 25 fache, insbesondere das 16 bis 20 fache der Breite (18) ist und die Höhe (16) des Messkörpers das 5 bis 10 fache, insbesondere das 5 bis 8 fache der Breite (18) des Messkörpers ist.

9. Wägezelle nach einem der Ansprüche 1 bis 8, **dadurch gekennzeichnet, dass** die Länge des Krafteinleitungsabschnitts (24) entlang der Längsachse (12) des Messkörpers (10) zwischen 15 % und 25 %, insbesondere 20 % der Länge des Messkörpers ist, die Länge des Gelenkabschnitts (22) entlang der Längsachse des Messkörpers (10) zwischen 20 % und 30 %, insbesondere 25 % der Länge des Messkörpers (10) ist und die Länge des Kraftaufnahmeabschnitts (20) entlang der Längsachse des Messkörpers zwischen 65 % und 45 %, insbesondere 55 % der Länge des Messkörpers ist.

10. Wägezelle nach einem der Ansprüche 1 bis 9, **dadurch gekennzeichnet, dass** der Messkörper (10) mindestens drei, insbesondere vier Befestigungslöcher (36) umfasst, die als Bohrungen ausgebildet sind und in horizontaler Richtung durch den Messkörper (10) verlaufen und wobei insbesondere die Bohrungen auf einer Seite Versenkungen (38) enthalten, die zur Aufnahme von Senkköpfen von Schrauben ausgebildet sind.

11. Wägezelle nach einem der Ansprüche 1 bis 10, **dadurch gekennzeichnet, dass** der Messkörper (10) entlang seiner Längsachse (12) von einem gelenkabschnittsnahen Teil des Kraftaufnahmeabschnitts (20) bis zum Gelenkabschnitt (22) eine Vertiefung (40) aufweist, die zur, zumindest teilweisen Aufnahme einer Leiterplatte (42) mit darauf angeordneter Elektronik, insbesondere eines Analog-Digital-Wandlers zur Verarbeitung wenigstens eines Ausgangssignals des zumindest einen Dehnungsmessstreifens, ausgebildet ist.

## Claims

1. Weighing cell having a measuring member (10) of monolithic configuration, which has a force transducer portion (20), a force introduction portion (24) and an articulation portion (22) which is disposed between the force transducer portion (20) and the force introduction portion (24), wherein the measuring member (10) between a force transducer-proximal axial end and a force introduction-proximal axial end has a longitudinal axis (12); wherein the longitudinal axis (12) is configured in a horizontal direction; wherein the measuring member (10) in the force transducer portion (20) thereof comprises at least one fastening hole (36) for fastening the measuring member (10); wherein the axis of the at least one fastening hole (36) runs in a horizontal direction; wherein the weighing cell comprises at least one strain gauge (70) for detecting an elongating or compressing deformation of the measuring member (10), which strain gauge is disposed on the upper side or the lower side of the measuring member (10) in the region of the articulation portion (24); wherein the at least one strain gauge (70) is aligned in the horizontal direction, **characterized in that** the force introduction portion (24) has a receptacle (32) which is configured as a notch that proceeds from the upper side of the measuring member (10) and runs perpendicularly to the longitudinal axis, and **in that** the notch of the receptacle (32) is configured in a narrow direction of the measuring member, across the entire width (18) of the latter, and **in that** the notch of the receptacle (32) on the side thereof that faces away from the upper side of the measuring member has a round contour (72) and the weighing cell comprises an insert (52) which bears in a form-fitting manner in the round contour (72) of the receptacle (32), and wherein the insert (52), on the side thereof opposite the form-fit with the round contour, has a rectangular contour (56) for receiving a force transmission element (58), and **in that** the force transmission element (58) is configured in such a manner that the latter is able to be received in a form-fitting manner in the rectangular contour of the insert (52), and **in that** the force transmission element (58) has a blade (62) for supporting a bar to be weighed.

2. Weighing cell according to Claim 1, **characterized in that** the at least one strain gauge (70) is composed of a meandering, parallel-running resistance track which is aligned so as to be parallel to the longitudinal axis (12) of the measuring member (10).

3. Weighing cell according to Claim 1 or 2, **characterized in that** the articulation portion (22) has at least one, in particular two, thin places (30) on an upper articulation element (26), and at least one, in particular two, thin places (30) on a lower articulation element (28) that runs parallel to the upper articulation element (26).

4. Weighing cell according to Claim 3, **characterized in that** the weighing cell in the regions of the two thin places (39) of the upper articulation element (26) comprises in each case one strain gauge (70) which is disposed on the upper side on the upper articulation element (26), and **in that** the weighing cell in the regions of the two thin places (30) of the lower articulation element (28) comprises in each case one strain gauge (70) which is disposed on the lower side on the lower articulation element (28), and wherein the four strain gauges (70) of the weighing cell are connected so as to form a Wheatstone bridge circuit, and wherein in particular the circuitry of the two strain gauges (70) disposed on the upper side and the two strain gauges (70) disposed on the upper side are attached to a strain gauge strip (68), and wherein the circuitry of the two strain gauges (70) disposed on the lower side and the two strain gauges (70) disposed on the lower side are attached to a strain gauge strip (68).

5. Weighing cell according to Claim 3, **characterized in that** the weighing cell in the regions of the two thin places (30) of the upper articulation element (26) comprises in each case two strain gauges (70) which are disposed on the upper side on the upper articulation element (26), wherein the respective two strain gauges (70) are aligned so as to be parallel and disposed next to one another in terms of a narrow side (18) of the measuring member, and wherein the four strain gauges (70) of the weighing cell are connected so as to form a Wheatstone bridge circuit, and wherein in particular the circuitry of the strain gauges (70) and the strain gauges (70) are attached to a strain gauge strip (68).

6. Weighing cell according to one of Claims 3 to 5, **characterized in that** all thin places (30) have the same thickness and in particular the same form.

7. Weighing cell according to one of Claims 1 to 6, **characterized in that** the weighing member (10) is mirror-symmetrical in terms of a plane, the alignment of the latter being parallel to the longitudinal axis (12) and to the axis of the at least one fastening hole (36).

8. Weighing cell according to one of Claims 1 to 7, **characterized in that** the weighing member (10) along the longitudinal axis (12) thereof has a length (14), from the upper side of the upper side-proximal articulation element (26) to the lower side of the lower side-proximal articulation element (28) has a height (16), and in the dimension perpendicular to the length and height has a width (18), wherein the width (18) of the measuring member is between 3 mm and 40 mm, in particular between 5 mm and 20 mm, and wherein the length (14) of the measuring member is 15 to 25 times, in particular 16 to 20 times, the width (18), and the height (16) of the measuring member is 5 to 10 times, in particular 5 to 8 times, the width (18) of the measuring member.

9. Weighing cell according to one of Claims 1 to 8, **characterized in that** the length of the force introduction portion (24) along the longitudinal axis (12) of the measuring member (10) is between 15% and 25%, in particular 20%, of the length of the measuring member; the length of the articulation portion (22) along the longitudinal axis of the measuring member (10) is between 20% and 30%, in particular 25%, of the length of the measuring member (10); and the length of the force transducer portion (20) along the longitudinal axis of the measuring member is between 65% and 45%, in particular 55%, of the length of the measuring member.

10. Weighing cell according to one of Claims 1 to 9, **characterized in that** the measuring member (10) comprises at least three, in particular four, fastening holes (36) which are configured as bores and run through the measuring member (10) in the horizontal direction, and wherein in particular the bores on one side include countersinks (38) which are configured for receiving countersunk heads of screws.

11. Weighing cell according to one of Claims 1 to 10, **characterized in that** the measuring member (10) along the longitudinal axis (12) thereof, from an articulation portion-proximal part of the force transducer portion (20) to the articulation portion (22) has a depression (40) which is configured to at least partially receive a circuit board (42) having disposed thereon electronics, in particular an analog-to-digital converter for processing at least one output signal of the at least one strain gauge.

## Revendications

1. Cellule de pesage dotée d'un corps de mesure (10) réalisé de manière monolithique, qui présente une partie de réception de force (20), une partie d'introduction de force (24) et une partie d'articulation (22) disposée entre la partie de réception de force (20) et la partie d'introduction de force (24), le corps de mesure (10) présentant un axe longitudinal (12) entre une extrémité axiale côté réception de force et une extrémité axiale côté introduction de force, l'axe longitudinal (12) étant réalisé dans une direction horizontale, le corps de mesure (10) comprenant, dans sa partie de réception de force (20), au moins un trou de fixation (36) servant à la fixation du corps de mesure (10), l'axe de l'au moins un trou de fixation (36) s'étendant dans une direction horizontale, la cellule de pesage comprenant au moins une jauge extensométrique (70) disposée sur le côté supérieur ou sur le côté inférieur du corps de mesure (10) dans la région de la partie d'articulation (24), laquelle jauge sert à la détection d'une déformation en extension ou en compression du corps de mesure (10), l'au moins une jauge extensométrique (70) étant orientée dans la direction horizontale, **caractérisée en ce que** la partie d'introduction de force (24) présente un logement (32) qui est réalisé sous la forme d'une entaille partant du côté supérieur du corps de mesure (10) et s'étendant perpendiculairement à l'axe longitudinal, et **en ce que** l'entaille du logement (32) est réalisée dans une direction étroite du corps de mesure sur toute sa largeur (18), et **en ce que** l'entaille du logement (32) a, sur son côté opposé au côté supérieur du corps de mesure, un contour rond (72) et la cellule de pesage comprend un insert (52) qui s'appuie avec complémentarité de formes dans le contour rond (72) du logement (32) et l'insert (52) présentant, sur son côté opposé à l'engagement par complémentarité de forme avec le contour rond, un contour rectangulaire (56) servant au logement d'un élément de transmission de force (58), et **en ce que** l'élément de transmission de force (58) est réalisé de telle sorte qu'il peut être logé avec complémentarité de formes dans le contour rectangulaire de l'insert (52), et **en ce que** l'élément de transmission de force (58) présente une arête (62) servant à supporter une barre à peser.

2. Cellule de pesage selon la revendication 1, **caractérisée en ce que** l'au moins une jauge extensométrique (70) est constituée d'une bande de résistance s'étendant parallèlement de manière sinueuse, qui est orientée parallèlement à l'axe longitudinal (12) du corps de mesure (10).

3. Cellule de pesage selon la revendication 1 ou 2, **caractérisée en ce que** la partie d'articulation (22) présente au moins un, en particulier deux emplacements minces (30) au niveau d'un élément d'articulation (26) supérieur et au moins un, en particulier deux emplacements minces (30) au niveau d'un élément d'articulation (28) inférieur s'étendant parallèlement à l'élément d'articulation (26) supérieur.

4. Cellule de pesage selon la revendication 3, **caractérisée en ce que** la cellule de pesage comprend, dans les régions des deux emplacements minces (39) de l'élément d'articulation (26) supérieur, respectivement une jauge extensométrique (70) disposée sur le côté supérieur de l'élément d'articulation (26) supérieur, et **en ce que** la cellule de pesage comprend, dans les régions des deux emplacements minces (30) de l'élément d'articulation (28) inférieur, respectivement une jauge extensométrique (70) disposée sur le côté inférieur de l'élément d'articulation (28) inférieur, et les quatre jauges extensométriques (70) de la cellule de pesage étant connectées de manière à former un pont de Wheatstone, et en particulier la connexion des deux jauges extensométriques (70) disposées du côté supérieur et les deux jauges extensométriques (70) disposées du côté supérieur étant appliquées sur une feuille de jauge extensométrique (68) et la connexion des deux jauges extensométriques (70) disposées du côté inférieur et les deux jauges extensométriques (70) disposées du côté inférieur étant appliquées sur une feuille de jauge extensométrique (68).

5. Cellule de pesage selon la revendication 3, **caractérisée en ce que** la cellule de pesage comprend, dans les régions des deux emplacements minces (30) de l'élément d'articulation (26) supérieur, respectivement deux jauges extensométriques (70) disposées sur le côté supérieur de l'élément d'articulation (26) supérieur, les deux jauges extensométriques (70) respectives étant orientées parallèlement et disposées l'une à côté de l'autre par rapport à un côté étroit (18) du corps de mesure, et les quatre jauges extensométriques (70) de la cellule de pesage étant connectées de manière à former un pont de Wheatstone, et en particulier la connexion des jauges extensométriques (70) et les jauges extensométriques (70) étant appliquées sur une feuille de jauge extensométrique (68).

6. Cellule de pesage selon l'une des revendications 3 à 5, **caractérisée en ce que** tous les emplacements minces (30) présentent la même épaisseur et présentent en particulier la même forme.

7. Cellule de pesage selon l'une des revendications 1 à 6, **caractérisée en ce que** le corps de mesure (10) présente une symétrie miroir par rapport à un plan dont l'orientation est parallèle à l'axe longitudinal (12) et à l'axe de l'au moins un trou de fixation (36).

8. Cellule de pesage selon l'une des revendications 1 à 7, **caractérisée en ce que** le corps de mesure (10) présente, le long de son axe longitudinal (12), une longueur (14), à partir du côté supérieur de l'élément d'articulation (26) supérieur jusqu'au côté inférieur de l'élément d'articulation (28) inférieur, une hauteur (16) et, dans la dimension perpendiculaire à la longueur et à la hauteur, une largeur (18), la largeur (18) du corps de mesure étant comprise entre 3 mm et 40 mm, en particulier entre 5 mm et 20 mm, et la longueur (14) du corps de mesure étant de 15 à 25 fois, en particulier de 16 à 20 fois la largeur (18) et la hauteur (16) du corps de mesure étant de 5 à 10 fois, en particulier de 5 à 8 fois la largeur (18) du corps de mesure.

9. Cellule de pesage selon l'une des revendications 1 à 8, **caractérisée en ce que** la longueur de la partie d'introduction de force (24) le long de l'axe longitudinal (12) du corps de mesure (10) est comprise entre 15 % et 25 %, en particulier est égale à 20 % de la longueur du corps de mesure, la longueur de la partie d'articulation (22) le long de l'axe longitudinal du corps de mesure (10) est comprise entre 20 % et 30 %, en particulier est égale à 25 % de la longueur du corps de mesure (10) et la longueur de la partie de réception de force (20) le long de l'axe longitudinal du corps de mesure est comprise entre 65 % et 45 %, en particulier est égale à 55 % de la longueur du corps de mesure.

10. Cellule de pesage selon l'une des revendications 1 à 9, **caractérisée en ce que** le corps de mesure (10) comprend au moins trois, en particulier quatre trous de fixation (36) qui sont réalisés sous forme d'alésages et s'étendent dans la direction horizontale à travers le corps de mesure (10) et en particulier les alésages comportant, sur un côté, des fraisages (38) qui sont réalisés pour le logement de têtes coniques de vis.

11. Cellule de pesage selon l'une des revendications 1 à 10, **caractérisée en ce que** le corps de mesure (10) présente, le long de son axe longitudinal (12) à partir d'une portion, proche de la partie d'articulation, de la partie de réception de force (20) jusqu'à la partie d'articulation (22), un évidement (40) qui est réalisé pour le logement au moins partiel d'une carte de circuits imprimés (42) sur laquelle est disposée une électronique, en particulier d'un convertisseur analogique-numérique servant au traitement d'au moins un signal de sortie de l'au moins une jauge extensométrique.
